# EUROPEAN PATENT SPECIFICATION

(11) **EP 1 291 507 B1**
(45) Date of publication and mention of the grant of the patent: **15.08.2007**
(21) Application number: 02020150.5
(22) Date of filing: 09.09.2002
(51) Int. Cl.: F02B 75/02, F02B 1/04, F02B 1/12, F02B 69/06

(54) **Two-cycle self-ignition gasoline engine**
Selbstzündender Zweitakt-Benzinverbrennungsmotor
Moteur à combustion d'essence à deux temps à auto-allumage

(30) Priority: 10.09.2001 JP 2001273683
(43) Date of publication of application: 12.03.2003
(73) Proprietor: Toyota Jidosha Kabushiki Kaisha, Toyota-shi, Aichi-ken, 471-8571 (JP)
(72) Inventor: Kobayashi, Tatsuo, Toyota-shi, Aichi-ken, 471-8571 (JP)
(74) Representative: TBK-Patent

(56) References cited:
- EP-A- 0 475 727
- WO-A-99/42718
- US-A- 5 027 757
- US-A- 5 517 951
- PATENT ABSTRACTS OF JAPAN vol. 2000, no. 14, 5 March 2001 (2001-03-05) & JP 2000 314318 A (NISSAN MOTOR CO LTD), 14 November 2000 (2000-11-14)

## Description

### BACKGROUND OF THE INVENTION

### 1. Field of the Invention

The invention relates to a two-cycle self-ignition gasoline engine.

### 2. Description of Related Art

In order to improve fuel efficiency, lean combustion is conducted in a gasoline engine. Lean combustion generates a relatively large amount of NOx. Therefore, lean combustion must be conducted so as to prevent such a large amount of NOx from being discharged into the atmosphere. In view of this, a method for removing NOx with a catalyst device provided in the exhaust system of the engine has been proposed. However, since the catalyst device does not always work well, it is desired that the engine generate a reduced amount of NOx during lean combustion.

Unlike spark ignition for igniting the mixture with spark plugs and causing combustion by flame propagation, self-ignition of the mixture in the gasoline engine allows the mixture to ignite at a multiplicity of positions simultaneously. This results in reduced combustion time, thereby enabling reduction in the amount of NOx.

For self-ignition of a lean mixture, a two-cycle engine is more advantageous than a four-cycle engine. Japanese Patent Laid-Open Publication No. 2000-220458 discloses self-ignition of the lean mixture in a two-cycle gasoline engine. However, the amount of NOx cannot be reduced enough by merely realizing self-ignition of the lean mixture in the two-cycle gasoline engine.

### SUMMARY OF THE INVENTION

In view of the above problems, it is an object of the invention to provide a two-cycle self-ignition gasoline engine capable of sufficiently reducing the amount of NOx.

Therefore, there is provided a two-cycle self-ignition gasoline engine characterized in that, when a fuel injection amount is large in a two-cycle self-ignition operation region, the two-cycle self-ignition gasoline engine increases an excess air ratio to a greater value than when the fuel injection amount is small.

According to the above two-cycle self-ignition gasoline engine, when the fuel injection amount is large in the two-cycle self-ignition operation region, the excess air ratio is set to a greater value than when the fuel injection amount is small. As the fuel injection amount is increased, the exhaust gas temperature is also increased accordingly. Therefore, the compression end temperature (the internal temperature of a cylinder at the top dead center) can be easily raised by the exhaust gas remaining in the cylinder. As a result, even if the excess air ratio is increased and the self-ignition temperature is raised, reliable two-cycle self-ignition operation is ensured. Since the combustion temperature and the combustion time are reduced, sufficient reduction in the amount of NOx can be realized.

According to a further aspect of the invention, the two-cycle self-ignition gasoline engine suitably includes a supercharging means. When the fuel injection amount is large, the supercharging means suitably increases a boost pressure to a higher value than when the fuel injection amount is small in order to increase the excess air ratio.

According to a further aspect of the invention, the two-cycle self-ignition gasoline engine suitably includes an intake valve, an exhaust valve, and a variable means capable of varying a crank angle range from opening of the exhaust valve to closing of the intake valve in at least two steps. When the fuel injection amount is large, the varying means suitably varies the crank angle range to a greater value than when the fuel injection amount is small in order to increase the excess air ratio.

According to a further aspect of the invention, the two-cycle self-ignition gasoline engine suitably includes an intake air cooling means. When the fuel injection amount is large, the intake air cooling means suitably reduces an intake air temperature to a lower value than when the fuel injection amount is small in order to increase the excess air ratio.

According to a further aspect of the invention, the two-cycle self-ignition gasoline engine suitably includes a supercharger capable of conducting supercharging operation in a low engine load region. In the low engine load region, the supercharger suitably conducts the supercharging operation in order to enable two-cycle self-ignition operation to be realized.

According to a further aspect of the invention, the two-cycle self-ignition gasoline engine suitably includes a spark plug. In a high engine load region, the two-cycle self-ignition gasoline engine suitably conducts two-cycle spark ignition operation rather than two-cycle self-ignition operation by using the spark plug.

According to a further aspect of the invention, the two-cycle self-ignition gasoline engine suitably includes an intake valve, an exhaust valve, a switching means for switching a timing of opening and closing the intake valve and the exhaust valve in at least two steps to enable both two-cycle operation and four-cycle operation to be realized, and a spark plug. In a high engine speed region, the two-cycle self-ignition gasoline engine suitably conducts four-cycle spark ignition operation rather than two-cycle self-ignition operation by using the switching means and the spark plug.

According to a further aspect of the invention, the two-cycle self-ignition gasoline engine suitably includes an intake valve, an exhaust valve, a switching means for switching a timing of opening and closing the intake valve and the exhaust valve in at least two steps to enable both two-cycle operation and four-cycle operation to be realized, and a spark plug. In an extremely low engine load region, the two-cycle self-ignition gasoline engine suitably conducts four-cycle spark ignition operation rather than two-cycle self-ignition operation by using the switching means and the spark plug.

According to a further aspect of the invention, the two-cycle self-ignition gasoline engine suitably includes an intake valve, an exhaust valve, a switching means for switching a timing of opening and closing the intake valve and the exhaust valve in at least two steps to enable both two-cycle operation and four-cycle operation to be realized, and a spark plug. In a high engine load region, the two-cycle self-ignition gasoline engine suitably conducts four-cycle spark ignition operation rather than two-cycle self-ignition operation by using the switching means and the spark plug.

According to a further aspect of the invention, in the two-cycle self-ignition gasoline engine, the four-cycle spark ignition operation is suitably Atkinson cycle operation.

According to a further aspect of the invention, the excess air ratio is suitably at least 1.5 and a compression ratio is suitably at least 11 in the two-cycle self-ignition operation of the two-cycle self-ignition gasoline engine.

### BRIEF DESCRIPTION OF THE DRAWINGS

The above and other objects, features, advantages, technical and industrial significance of the invention will be better understood by reading the following detailed description of exemplary embodiments of the invention, when considered in connection with the accompanying drawings in which:
Fig. 1 shows the overall structure of a two-cycle self-ignition gasoline engine according to an embodiment of the invention;
Fig. 2 is a graph showing the relation between an excess air ratio R and an amount of NOx in two-cycle self-ignition operation;
Fig. 3 is a first map for switching between two-cycle operation and four-cycle operation;
Fig. 4 is a graph showing a change in boost pressure P, excess air ratio R and actual compression ratio E relative to a change in engine load at a specific engine speed;
Fig. 5 is a graph showing a change in boost pressure P, excess air ratio R and actual compression ratio E relative to a change in engine speed at a specific engine load;
Fig. 6 is a second map for switching between two-cycle operation and four-cycle operation;
Fig. 7 is a third map for switching between two-cycle operation and four-cycle operation; and
Fig. 8 is a fourth map for switching between two-cycle operation and four-cycle operation.

### DESCRIPTION OF THE EXEMPLARY EMBODIMENTS

In the following description and the accompanying drawings, the invention will be described in more detail in terms of exemplary embodiments.

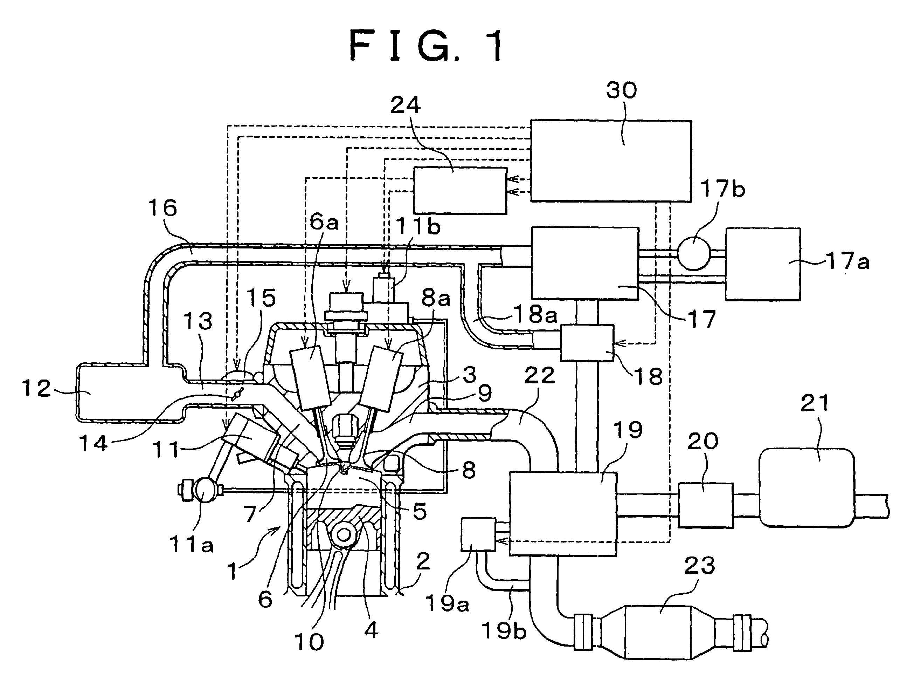

Fig. 1 shows the overall structure of a two-cycle self-ignition gasoline engine according to an embodiment of the invention. The two-cycle self-ignition gasoline engine of the present embodiment includes an engine body 1, a cylinder block 2, a cylinder head 3, pistons 4, combustion chambers 5 and the like. Intake ports 7 and exhaust ports 9 are formed in the cylinder head 3. Each intake port 7 communicates with a corresponding combustion chamber 5 through a corresponding intake valve 6. Each exhaust port 9 communicates with a corresponding combustion chamber 5 through a corresponding exhaust valve 8. A spark plug 10 is mounted above each combustion chamber 5. Each fuel injection valve 11 injects the fuel directly into a corresponding combustion chamber 5. An accumulator 11a supplies high-pressure fuel to the fuel injection valve 11 of each cylinder. The fuel force-fed from a fuel pump 11b maintains a desired high fuel pressure in the accumulator 11 a.

Branch pipes 13 of an intake manifold located downstream of a surge tank 12 are respectively connected to the intake ports 7. The branch pipes 13 are provided respectively corresponding to the cylinders, and an intake control valve 14 is provided in each branch pipe 13. The opening amount of each intake control valve 14 can be arbitrarily controlled with a drive unit 15 such as a stepping motor. In an intake duct 16 located upstream of the surge tank 12, an intercooler 17, a bypass flow rate regulating valve 18, a compressor of a turbocharger 19, and an air flow meter 20 are sequentially provided in this order from the downstream side. The intake duct 16 communicates with the atmosphere through an air cleaner 21.

The intercooler 17 serves to cool the intake air. For example, the intercooler 17 is of a water-cooling type, and includes a radiator 17a and a circulating pump 17b. The bypass flow rate regulating valve 18 has a bypass passage 18a bypassing the intercooler 17, and regulates the flow rate of the intake air flowing into the intercooler 17.

Branch pipes 22 of an exhaust manifold located upstream of a turbine of the turbocharger 19 are respectively connected to the exhaust ports 9 of the respective cylinders. On the downstream side of the turbine, the turbocharger 19 communicates with the atmosphere through a three-way catalyst device 23. A boost pressure regulating valve 19a is provided in a waste gate passage 19b bypassing the turbine of the turbocharger 19.

Each intake valve 6 and each exhaust valve 8 are capable of being opened and closed at any timing by electromagnetic actuators 6a, 8a or the like, respectively. A controller 30 controls a drive circuit 24 for driving the electromagnetic actuators 6a, 8a. The controller 30 controls not only opening and closing of the intake valves 6 and the exhaust valves 8 through the drive circuit 24, but also controls the opening amount of the intake control valves 14 through the drive unit 15, the fuel injection amount and the fuel injection timing through the fuel injection valves 11, the ignition timing through the spark plugs 10, the fuel pressure in the accumulator 11a through the fuel pump 11b, the intake air temperature through the bypass flow rate regulating valve 18, and the boost pressure through the boost pressure regulating valve 19a.

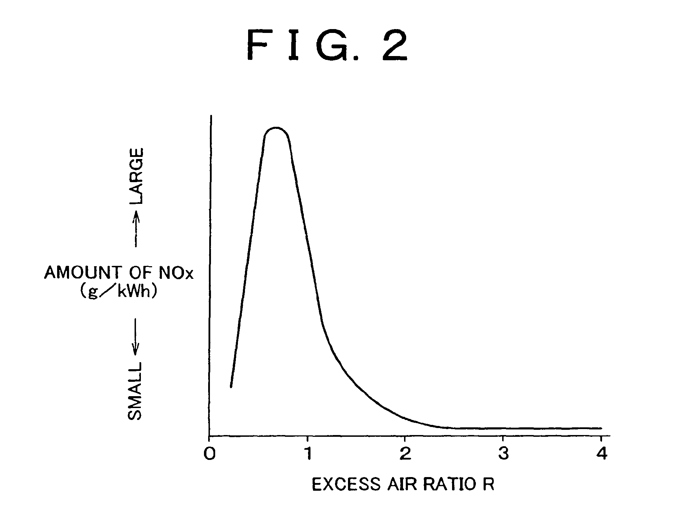

Fig. 2 is a graph showing the relationship between the excess air ratio R (the ratio of the actual air supply amount to the theoretical air amount required for fuel combustion) and the amount of NOx (the amount of NOx generated per unit time output power) in two-cycle self-ignition operation. The graph shows that the amount of NOx cannot be reduced by merely conducting two-cycle self-ignition operation. In the present embodiment, two-cycle self-ignition operation is conducted at the excess air ratio R of 1.5 or higher in order to sufficiently reduce the amount of NOx. Self-ignition of such a lean mixture requires an increased compression ratio E. In the present embodiment, two-cycle self-ignition operation is therefore conducted at the actual compression ratio E of 11 or higher.

Combustion of the mixture generates radical components such as OH. If the radical components are left in the cylinder, the subsequent self-ignition of the lean mixture would be facilitated due to their activity. However, four-cycle engines have a long period from the expansion stroke, the stroke in which the radical components are generated, to the ignition timing at the end of the subsequent compression stroke. Therefore, the radical components generated in the expansion stroke would chemically react with other substances by the ignition timing due to their extremely high activity. As a result, the activity of the radical components cannot contribute to self-ignition of the mixture.

In the present embodiment, a two-cycle engine having a reduced period from the expansion stroke to the ignition timing at the end of the compression stroke is used so that the radical components generated in the expansion stroke still remain in the mixture at the ignition timing. This enables implementation of reliable self-ignition of the lean mixture. It should be understood that leaving the radical components in the cylinder means leaving a part of the exhaust gas in the cylinder. Since the two-cycle engine has a short period from the expansion stroke to the ignition timing, the exhaust gas remaining in the cylinder is retained at a relatively high temperature. This is advantageous to reliably raise the temperature of the lean mixture to the ignition temperature in the compression stroke.

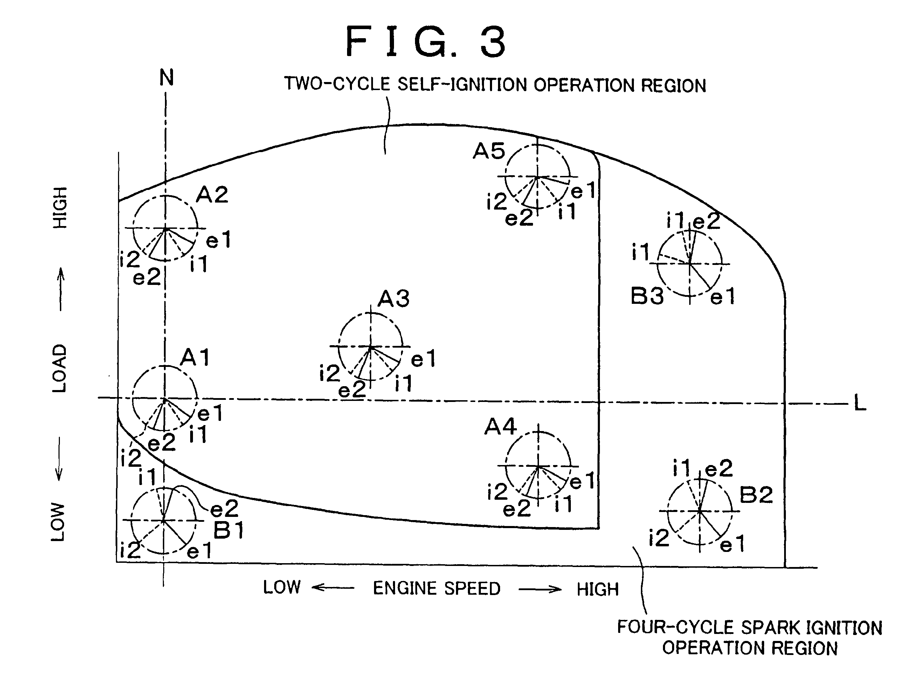

However, it is difficult to conduct two-cycle self-ignition operation in every operation region of the engine. In the present embodiment, two-cycle self-ignition operation and four-cycle spark ignition operation are switched according to a first map in Fig. 3. More specifically, two-cycle self-ignition operation is conducted in the low and intermediate revolution regions except the extremely low load region, and four-cycle spark ignition operation is conducted in the extremely low load region and the high revolution region.

In order to realize both two-cycle operation and four-cycle operation, the present embodiment allows the electromagnetic actuators 6a, 6b to open and close the intake valve 6 and the exhaust valve 8 at any timing. In the first map of Fig. 3, A1 through A5 and B 1 through B3 indicate typical timings of opening and closing the intake valve 6 and the exhaust valve 8 (i.e., crank angles) in the operating state of the engine. In A1 through A5 and B1 through B3, i1 indicates the timing of opening the intake valve 6, i2 denotes the timing of closing the intake valve 6, e1 denotes the timing of opening the exhaust valve 8, and e2 denotes the timing of closing the exhaust valve 8.

In the low revolution, low load region A1, the exhaust valve 8 is opened at 50° before the bottom dead center to start the exhaust stroke. The intake valve 6 is then opened at 35° before the bottom dead center to start the scavenging stroke. The exhaust valve 8 is closed at 20° after the bottom dead center to complete the scavenging stroke. The exhaust valve 6 is closed at 30° after the bottom dead center to complete the intake stroke. The compression stroke is started thereafter. In this case, two-cycle self-ignition operation is conducted as follows: the fuel injection valve 11 injects the fuel after the exhaust valve 8 is closed, and the mixture thus produced is made to self-ignite right after the top dead center. This two-cycle self-ignition operation has a relatively small crank angle range from opening of the exhaust valve 8 to closing of the intake valve 6, that is, 80°. In order to realize sufficient gas exchange (replacement of exhaust air with intake air) in this crank angle range, the exhaust gas is forcibly replaced with the intake air by using supercharging operation of the turbocharger 19.

It should be understood that the exhaust gas is not completely replaced with the intake air. Therefore, a part of combustion gas is left in the cylinder so as to ensure self-ignition by the activity of the radical components contained therein. Since the fuel is injected after the exhaust valve 8 is closed, that is, after the scavenging stroke is completed, the injected fuel is not even partially discharged to the exhaust system of the engine. As a result, a homogeneous mixture using the entire volume of injected fuel is produced in the cylinder.

On the other hand, in the low revolution, extremely low load region B 1 such as upon starting of the engine, the exhaust gas has a low temperature and the turbocharger 19 cannot work well. Accordingly, supercharging operation is substantially impossible. This makes it difficult to conduct gas exchange in the relatively small crank angle range, and therefore four-cycle spark ignition operation is conducted. The exhaust valve 6 is opened at 5° before the top dead center of the intake stroke, and closed at 55° after the bottom dead center of the intake stroke. The fuel injection valve 11 injects the fuel during this intake stroke, and a homogeneous mixture is produced in the cylinder. The spark plug 10 then ignites the mixture just before the top dead center of the compression stroke. Four-cycle spark ignition operation is conducted in this way. The exhaust valve 8 is opened at 35° before the bottom dead center of the expansion stroke to start the exhaust stroke, and closed at 5° after the top dead center of the exhaust stroke.

In the present embodiment, a relatively large piston stroke is used in order to meet the aforementioned requirement for the increased compression ratio E in the two-cycle self-ignition operation. Accordingly, the compression ration E becomes extremely high if the intake valve is closed near the bottom dead center of the intake stroke as in the case of a typical four-cycle engine. In the present embodiment, the timing of closing the intake valve 6 is retarded (55° after the bottom dead center of the intake stroke) in order to prevent excessive increase in actual compression ratio E. Accordingly, the four-cycle spark ignition operation in the present embodiment is Atkinson cycle operation having a greater crank angle range in the expansion stroke than in the compression stroke, that is, having a high actual expansion ratio.

Two-cycle self-ignition operation is conducted in the low revolution, high load region A2. The exhaust valve 8 is opened at 60° before the bottom dead center, and closed at 30° after the bottom dead center. The intake valve 6 is opened at 30° before the bottom dead center, and closed at 40° after the bottom dead center. The crank angle range of the intake stroke after the exhaust valve is closed is 10°, which is the same as that in the low revolution, low load region A1. However, the respective crank angle ranges of the exhaust stroke and the scavenging stroke are both greater than those in the region A1. This is because the fuel injection amount is increased with increase in engine load and sufficient gas exchange must be conducted accordingly. In this case, the exhaust gas has a relatively high temperature and the boost pressure of the turbocharger 19 is increased. However, this is not enough to realize sufficient gas exchange. It is therefore preferable to increase the crank angle range from opening of the exhaust valve to closing of the intake valve, that is, to increase the exhaust stroke, the scavenging stroke and the intake stroke. As the exhaust stroke is increased, a greater amount of exhaust gas is discharged, thereby facilitating supply of the intake air in the intake stroke. Similarly, as the scavenging stroke or the intake stroke is increased, supply of the intake air is facilitated correspondingly.

In the present embodiment, the crank angle range from opening of the exhaust valve to closing of the intake valve, especially, the exhaust stroke and the scavenging stroke, is increased in the low revolution, high load region A2 in order to implement sufficient gas exchange. As a result, the low revolution, high load region A2 has a greater fuel injection amount, but has a higher excess air ratio R as compared to the low revolution, low load region A1. It should be understood that, in the region A2 as well, it is preferable to leave a part of the exhaust gas in the cylinder in order to ensure self-ignition.

In order to reduce the amount of NOx sufficiently, it is preferable to increase the excess air ratio of the mixture as much as possible and reduce the combustion temperature. In the present embodiment, the turbocharger 19 works well and the boost pressure can be sufficiently increased in the low revolution, high load region A2. In other words, the cylinder has a sufficiently high internal pressure at the start of the compression stroke. Accordingly, the compression end temperature (the internal temperature of the cylinder at the top dead center) can be increased even if the timing of starting the compression stroke is slightly retarded, that is, the actual compression ratio E is slightly reduced, as compared to the low revolution, low load region A1. This ensures self-ignition although the excess air ratio R of the mixture is increased in the low revolution, high load region. Moreover, the temperature of the exhaust gas remaining in the cylinder is increased with increase in engine load. This is also advantageous to increase the compression end temperature.

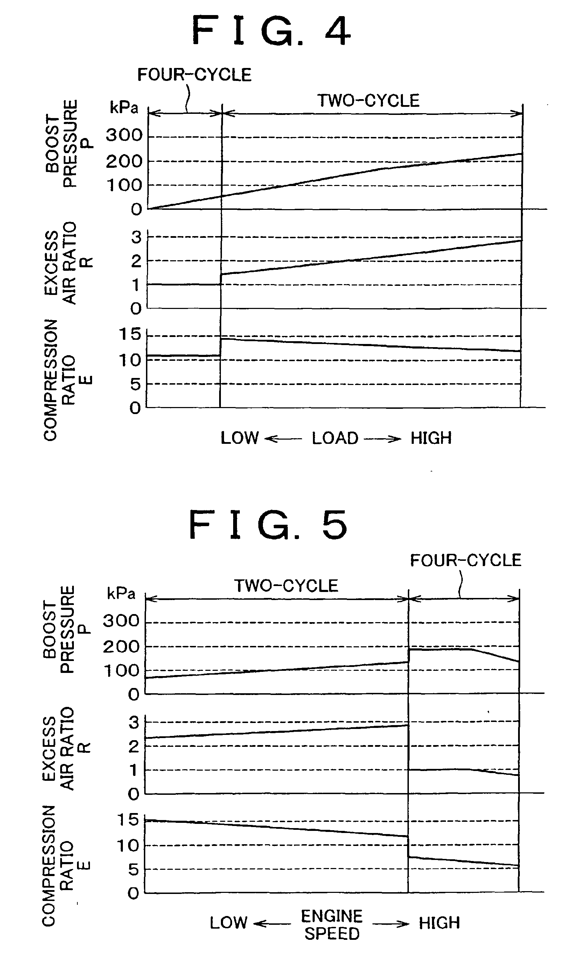

Fig. 4 shows a change in boost pressure P, excess air ratio R and actual compression ratio E relative to a change in engine load in the low revolution region in the first map of Fig. 3 (i.e., the range shown by chain line N). The exhaust gas temperature rises with increase in load. Therefore, the boost pressure P increases gradually with increase in load. As described before, in the extremely low load region, sufficient gas exchange is difficult due to a low boost pressure P. Therefore, four-cycle spark ignition operation rather than two-cycle self-ignition operation is conducted in the extremely low load region. In this region, the excess air ratio R is set to 1 in order to ensure reliable ignition, and stoichiometric combustion is conducted instead of lean combustion. However, this four-cycle spark ignition operation is Atkinson cycle operation and therefore enables implementation of sufficiently low fuel consumption. The actual compression ratio E is fixed to about 11. In other words, the intake valve is closed at a fixed timing. In order to maintain the excess air ratio R of 1 against a change in fuel injection amount, the opening amount of the intake control valve 14 is controlled in view of slight increase in boost pressure.

In the low load region, the exhaust gas temperature is somewhat increased, whereby the boost pressure becomes high enough for gas exchange.
Therefore, two-cycle self-ignition operation is conducted in the low load region. Initially, the boost pressure is not so high enough, and the cylinder has a relatively low internal pressure at the start of the compression stroke (when the intake valve is closed). In order to raise the compression end temperature to the self-ignition temperature of the lean mixture (which becomes higher as the excess air ratio R is increased), a relatively high actual compression ratio E is required. Therefore, the actual compression ratio E is raised to 14.5 by advancing the timing of closing the intake valve. However, this is not enough to raise the compression end temperature to the self-ignition temperature of an extremely lean mixture. Therefore, the excess air ratio R is set to a relative small value, 1.5, in order to ensure reliable self-ignition.

As the load is increased, the boost pressure rises gradually and thus the pressure in the cylinder at the start of the compression stroke also rises gradually. Accordingly, even if the excess air ratio R is gradually increased for gradual increase in self-ignition temperature and the actual compression ratio E is gradually reduced, the compression end temperature can be raised to the self-ignition temperature of the lean mixture. Since the lean mixture is allowed to self-ignite as much as possible, the combustion temperature is reduced, enabling sufficient reduction in the amount of NOx. In other words, since the fuel injection amount increases with increase in engine load, the mixture in the cylinder may possibly reach the self-ignition temperature before the top dead center of the compression stroke unless the excess air ratio R is increased, that is, unless the self-ignition temperature is increased. In this case, combustion starts before the top dead center of the compression stroke. This increases the combustion period, hindering the amount of NOx from being reduced as intended. In the two-cycle self-ignition operation as well, the opening amount of the intake control valve 14 is controlled in view of the boost pressure in order to realize the excess air ratio R in each operating state of the engine.

Referring back to Fig. 3, as the engine load and the engine speed are both increased from the low revolution, low load region A1 to the region A3, the exhaust valve is opened at 65° before the bottom dead center and closed at 25° after the bottom dead center. The intake valve is opened at 40° before the bottom dead center and closed at 40° after the bottom dead center. As a result, the exhaust stroke, the scavenging stroke and the intake stroke are increased. As the engine load and the engine speed are further increased to the region A5, the exhaust valve is opened at 80° before the bottom dead center and closed at 35° after the bottom dead center. The intake valve is opened at 35° before the bottom dead center and closed at 55° after the bottom dead center. As a result, the exhaust stroke, the scavenging stroke and the intake stroke are further increased.

When only the engine speed is increased from the value in the low revolution, low load region A1 to the value of the region A5 (that is, in the region A4), the exhaust valve is opened at 70° before the bottom dead center and closed at 20° after the bottom dead center. The intake valve is opened at 50° before the bottom dead center and closed at 45° after the bottom dead center. Therefore, the region A4 has a longer exhaust stroke, scavenging stroke and intake stroke as compared to the region A1. Moreover, the region A4 has a shorter exhaust stroke, the same scavenging stroke, and a longer intake stroke as compared to the region A5. The strokes are thus reduced in total.

In the same engine speed region of the two-cycle self-ignition operation region, the excess air ratio R and the actual compression ratio E are varied with a change in engine load, based on the same idea as that described in connection with Fig. 3. Fig. 5 shows a change in boost pressure P, excess air ratio R and actual compression ratio E relative to a change in engine speed in the low load region of Fig. 3 (i.e., the region shown by chain line L). Even the initial boost pressure P is high enough to allow gas exchange to be realized, because the operation of the engine is in the low revolution, low load region. However, as the engine speed is increased, the exhaust gas temperature rises and thus the boost pressure P also rises gradually. The excess air ratio R is initially about 2.1. As the engine speed is increased, the fuel injection amount is increased, but the air supply amount is increased more. Therefore, the excess air ratio R is increased gradually. The actual compression ratio E is initially 15, but is gradually reduced with increase in engine speed. As in the case where the engine load is varied (which is described above), by varying the excess air ratio R and the actual compression ratio E as such, the lean mixture is allowed to self-ignite as much as possible just after the top dead center of the compression stroke because the boost pressure and the temperature of the exhaust gas remaining in the cylinder are increased with increase in engine speed.

The absolute time required for gas change is reduced with increase in engine speed. Accordingly, when the engine speed is increased, the crank angle for gas exchange, that is, the crank angle from opening of the exhaust valve to closing of the intake valve, must be increased more than in the case where the engine load is increased. In the present embodiment, especially the scavenging stroke is increased. However, there is a limit on advancing the timing of opening the exhaust valve and retarding the timing of closing the intake valve. It is therefore difficult to conduct gas exchange in the high revolution region. Accordingly, four-cycle spark ignition operation is conducted instead of two-cycle self-ignition operation.

As shown in Fig. 3, in the high revolution, extremely low load region B2, the intake valve and the exhaust valve are opened and closed at the same timings as those in the low revolution, extremely low load region B 1. In the high revolution, high load region B3, however, the intake valve is closed at 100° after the bottom dead center of the intake stroke. The reason for this is as follows: unless the actual compression ratio E is reduced as such, the cylinder would have an excessively high internal pressure at the end of the compression stroke due to the increased boost pressure, thereby possibly causing pre-ignition or knocking.

Referring back to Fig. 5, as the engine speed is increased to the high revolution region, the excess air ratio R is reduced to 1 and four-cycle spark ignition operation is conducted. As the engine speed gets closer to the maximum value, the excess air ratio R is slightly reduced from 1 in order to obtain greater engine output power. As a result, combustion of a rich mixture is conducted. When two-cycle operation is switched to four-cycle operation, the number of explosions is reduced by half, causing significant reduction in engine output power. Therefore, in order to increase the engine output power, the boost pressure regulating valve 19a is controlled to increase the boost pressure P to a prescribed value. The boost pressure P thus increased is maintained while the excess air ratio R is 1. The boost pressure P is then gradually reduced with degrease in excess air ratio R. The actual compression ratio E is gradually reduced. In other words, the timing of opening the exhaust valve is gradually retarded so as to implement the above excess air ratio R with the above boost pressure P and prevent occurrence of pre-ignition of a rich mixture and knocking.

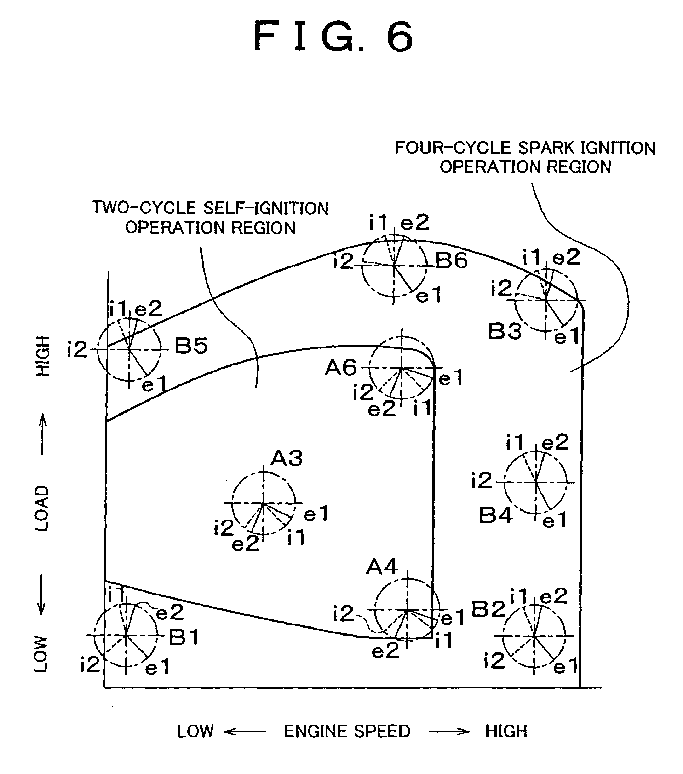

Fig. 6 is a second map for switching between two-cycle self-ignition operation and four-cycle spark ignition operation. The second map is different from the first map of Fig. 3 in that four-cycle spark ignition operation rather than two-cycle self-ignition operation is conducted in the high load region. In the four-cycle spark ignition operation, high engine output power can be more easily obtained by using supercharging operation or the like, as compared to the two-cycle self-ignition operation. In the second map, priority is given to engine output power over reduction in the amount of NOx. However, it should be understood that, in the low and intermediate revolution, low and intermediate load regions, two-cycle self-ignition operation is conducted with a lean mixture, and therefore the amount of NOx can be reduced sufficiently.

In the second map of Fig. 6, the regions denoted with the same reference numerals and characters (A3, A4, B1 to B3) have the same timings of opening and closing the intake valve and the exhaust valve as those in the first map of Fig. 3. In the intermediate revolution, intermediate load region A6, the exhaust valve is opened at 80° before the bottom dead center and closed at 30° after the bottom dead center. The intake valve is opened at 45° before the bottom dead center and closed at 50° after the bottom dead center. In the high revolution, intermediate load region B4, the intake valve is opened at 10° before the top dead center of the intake stroke and closed at 90° after the bottom dead center of the intake stroke. The exhaust valve is opened at 35° before the bottom dead center of the expansion stroke and closed at 5° after the top dead center of the exhaust stroke. In the low revolution, high load region B5, the intake valve is opened at 10° before the top dead center of the intake stroke and closed at 90° after the bottom dead center of the intake stroke. The exhaust valve is opened at 35° before the bottom dead center of the expansion stroke and closed at 5° after the top dead center of the exhaust stroke. In the intermediate revolution, high load region B6, the intake valve is opened at 5° before the top dead center of the intake stroke and closed at 95° after the bottom dead center of the intake stroke. The exhaust valve is opened at 35° before the bottom dead center of the expansion stroke and closed at 5° after the top dead center of the exhaust stroke.

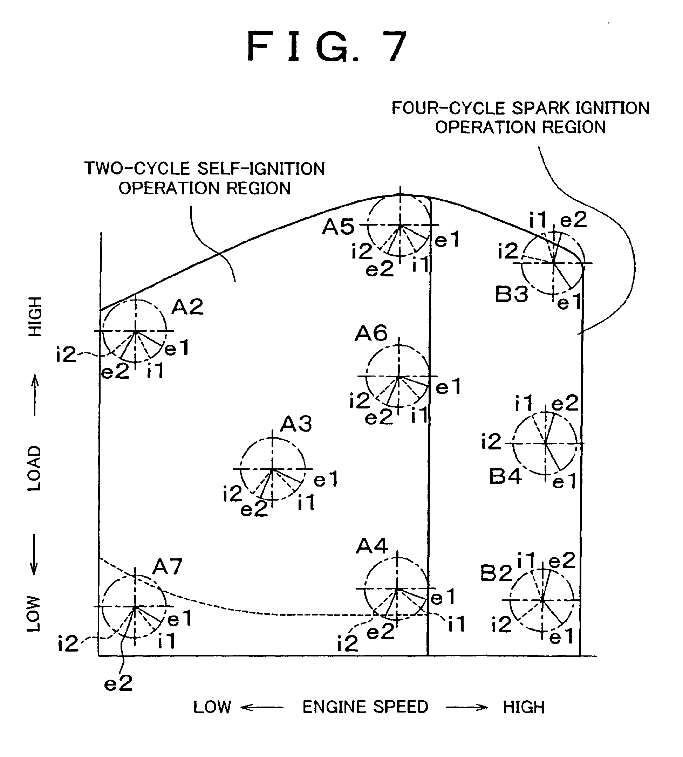

Fig. 7 is a third map for switching between two-cycle self-ignition operation and four-cycle spark ignition operation. The third map is different from the first map of Fig. 3 in that two-cycle self-ignition operation rather than four-cycle spark ignition operation is conducted in the extremely low load region excluding the high revolution region. In the low revolution, extremely low load region A7, the exhaust valve is opened at 50° before the bottom dead center and closed at 20° after the bottom dead center. The intake valve is opened 35° before the bottom dead center and closed at 30° after the bottom dead center. The regions denoted with the other reference numerals and characters in the third map are the same as those of the first and second maps in Figs. 3 and 6.

When only the turbocharger 19 is used as a supercharger, it is difficult to conduct supercharging operation at an extremely low load due to a low exhaust temperature, as described above. However, driving a supercharger of Roots pump type or the like with engine output power, electric motor output power or the like would enable supercharging operation to be conducted even at an extremely low load. As a result, gas exchange is realized in the extremely low load region as in the third map, thereby enabling two-cycle self-ignition operation to be implemented. The excess air ratio R in this two-cycle self-ignition operation may be greater than 1 in order to reduce the amount of NOx. In order to enable a reliable starting property and reliable idling stability to be obtained, however, it is preferable to use the excess air ratio R of 1 to ensure a reliable ignition property.

The excess air ratio R of 1 is disadvantageous to reduce the amount of NOx, but the amount of NOx can be reduced more than in the four-cycle spark ignition operation. Since switching from four-cycle spark ignition operation to two-cycle self-ignition operation is conducted less frequently, the torque shock is less likely to be generated, enabling improvement in drivability. Moreover, two-cycle operation has a greater number of explosions than that in four-cycle operation. Therefore, the idling speed can be set to a lower value than that in four-cycle operation, thereby enabling reduction in fuel consumption.

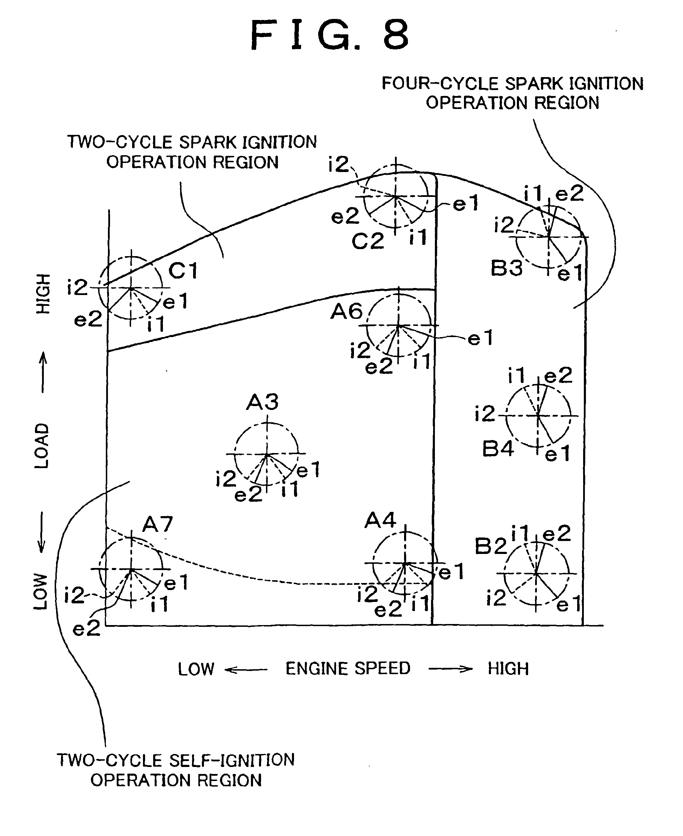

Fig. 8 is a fourth map for switching between two-cycle operation and four-cycle operation. The fourth map is different from the third map of Fig. 7 in that two-cycle spark ignition operation rather than two-cycle self-ignition operation is conducted in the low and intermediate revolution, high load regions. In the two-cycle spark ignition operation, the excess air ratio R is set to about 1. Therefore, high engine output power can be more easily obtained as compared to the two-cycle self-ignition operation. In the fourth map, priority is given to engine output power over reduction in the amount of NOx. However, it should be understood that, in the low and intermediate revolution, low and intermediate load regions, two-cycle self-ignition operation is conducted with a lean mixture, and therefore the amount of NOx can be reduced sufficiently. As the engine load is increased, two-cycle self-ignition operation is switched to two-cycle spark ignition operation rather than four-cycle spark ignition operation as in the second map of FIG. 6. As a result, the torque shock is less likely to be generated, enabling improvement in drivability.

In the low revolution, high load region C1, two-cycle spark ignition operation is conducted as follows: the exhaust valve is opened at 60° before the bottom dead center and closed at 50° after the bottom dead center. The intake valve is opened at 30° before the bottom dead center and closed at 90° after the bottom dead center. In the intermediate revolution, high load region C2, the exhaust valve is opened at 80° before the bottom dead center and closed at 70° after the bottom dead center. The intake valve is opened at 30° before the bottom dead center and closed at 100° after the bottom dead center. In the two-cycle spark ignition operation, the timing of closing the intake valve is retarded and the actual compression ration E is reduced as compared to the two-cycle self-ignition operation. This is because spark ignition does not require the temperature of the mixture to be raised so much by compression. This two-cycle spark ignition operation is therefore Atkinson cycle operation having a high expansion ratio, enabling reduction in fuel consumption.

In every map described above, four-cycle spark ignition operation is conducted at a high engine speed. However, the invention is not limited to this. For example, the present embodiment includes the intercooler 17. Therefore, by cooling the intake air at a high engine speed, a required amount of intake air can be supplied to the cylinder even if the gas exchange time is short. As a result, a desired, lean excess air ratio R is obtained, whereby two-cycle self-ignition operation can be conducted at a high engine speed.

Moreover, combination of intake cooling operation of the intercooler and supercharging operation of the turbocharger would simplify the above-described timing control of opening and closing the intake valve and the exhaust valve in the two-cycle self-ignition operation region. More specifically, as the fuel injection amount is increased, the amount of intake air bypassing the intercooler is reduced and a greater amount of intake air is cooled in order to increase the excess air ratio R. Even if the intake valve and the exhaust valve are opened and closed at a fixed timing with a cam for two-cycle self-ignition operation, a desired excess air ratio R according to the fuel injection amount can be realized.

As the engine load or engine speed is increased in the two-cycle self-ignition operation region, the excess air ratio R is gradually increased according to increase in the fuel injection amount. However, the control in the two-cycle self-ignition operation region may be further simplified. More specifically, the excess air ratio R may be varied in two steps (i.e., the smaller fuel injection amount region and the greater fuel ignition amount region). In the greater fuel injection amount region, the exhaust gas has a high temperature. Therefore, the compression end temperature can be easily raised by the exhaust gas remaining in the cylinder. As a result, even if the excess air ratio R is increased and the self-ignition temperature is raised correspondingly, reliable self-ignition is ensured. Such two-cycle self-ignition operation using an increased excess air ratio R enables sufficient reduction in the amount of NOx.

In the two-cycle self-ignition operation, the crank angle range from opening of the exhaust valve to closing of the intake valve may be varied in at least two steps (i.e., the smaller fuel injection amount region and the greater fuel ignition amount region) by switching at least two cams. In other words, a higher excess air ratio R may be applied in the greater fuel injection amount region than in the smaller fuel injection amount region.

In the two-cycle self-ignition operation, a higher excess air ratio R may be applied in the greater fuel injection amount region than in the smaller fuel injection amount region by cooling the intake air in two steps. Alternatively, a higher excess air ratio R may be applied in the greater fuel injection amount region than in the smaller fuel injection amount region by conducting supercharging operation in two steps.

In two-cycle self-ignition operation of the present embodiment, lean combustion is conducted while sufficiently reducing the amount of NOx. This eliminates the need for a special catalyst device for removing NOx produced in the lean combustion such as a lean NOx catalyst device. Even if HC, CO and the like are contained in the exhaust gas, they can be sufficiently removed with a typical three-way catalyst device 23. Moreover, in two-cycle or four-cycle spark ignition operation using the excess air ratio R of 1, HC, CO and NOx contained in the exhaust gas can be satisfactorily removed with the three-way catalyst device 23.

As has been described above, in the two-cycle self-ignition operation region, the two-cycle self-ignition gasoline engine 1 realizes a higher excess air ratio in the greater fuel injection amount region than in the smaller fuel injection amount region. As the fuel injection amount is increased, the exhaust gas temperature is also increased accordingly. Therefore, the compression end temperature can be easily raised by the exhaust gas remaining in the cylinder. As a result, even if the excess air ratio R is increased and the self-ignition temperature is raised, reliable two-cycle self-ignition operation is ensured. Since the combustion temperature and the combustion time are reduced, sufficient reduction in the amount of NOx can be realized.

In a two-cycle self-ignition operation region, the two-cycle self-ignition gasoline engine 1 increases the excess air ratio R to a higher value when the fuel injection amount is large than when the fuel injection amount is small. This enables sufficient reduction in the amount of NOx discharged from the gasoline engine 1.

In a two-cycle self-ignition operation region, the two-cycle self-ignition gasoline engine 1 increases the excess air ratio R to a higher value when the fuel injection amount is large than when the fuel injection amount is small. This enables sufficient reduction in the amount of NOx discharged from the gasoline engine 1.

While the invention has been described with reference to exemplary embodiments thereof, it is to be understood that the invention is not limited to the exemplary embodiments or constructions. To the contrary, the invention is intended to cover various modifications and equivalent arrangements. In addition, while the various elements of the exemplary embodiments are shown in various combination and configurations, which are exemplary, other combinations and configurations, including more, less or only a single element, are also within the sprit and scope of the invention.
In a two-cycle self-ignition operation region, the two-cycle self-ignition gasoline engine (1) increases the excess air ratio (R) to a higher value when the fuel injection amount is large than when the fuel injection amount is small. This enables sufficient reduction in the amount of NOx discharged from the gasoline engine (1).

## Claims

1. A two-cycle self-ignition gasoline engine (1), **characterized in that**, when a fuel injection amount is large in a two-cycle self-ignition operation region, the engine increases an excess air ratio (R) to a greater value than when the fuel injection amount is small.

2. The two-cycle self-ignition gasoline engine according to claim 1, **characterized in that**
the engine comprises a supercharging means (19, 19a), and
when the fuel injection amount is large, the supercharging means (19, 19a) increases a boost pressure to a higher value than when the fuel injection amount is small in order to increase the excess air ratio (R).

3. The two-cycle self-ignition gasoline engine according to claim 1, **characterized in that**
the engine comprises:
an intake valve (6);
an exhaust valve (8); and
a variable means (6, 6a, 8, 8a, 24, 30) capable of varying a crank angle range from opening of the exhaust valve (e1) to closing of the intake valve (i2) in at least two steps, and
when the fuel injection amount is large, the varying means (6, 6a, 8, 8a, 24, 30) varies the crank angle range to a greater value than when the fuel injection amount is small in order to increase the excess air ratio.

4. The two-cycle self-ignition gasoline engine according to claim 1, **characterized in that**
the engine comprises an intake air cooling means (17), and
when the fuel injection amount is large, the intake air cooling means (17) reduces an intake air temperature to a lower value than when the fuel injection amount is small in order to increase the excess air ratio (R).

5. The two-cycle self-ignition gasoline engine according to any one of claims 1 through 4, **characterized in that**
the engine comprises a supercharger capable of conducting supercharging operation in a low engine load region, and
in the low engine load region, the supercharger conducts the supercharging operation in order to enable two-cycle self-ignition operation to be realized.

6. The two-cycle self-ignition gasoline engine according to any one of claims 1 through 4, **characterized in that**
the engine comprises a spark plug (10), and
in a high engine load region, the engine conducts two-cycle spark ignition operation rather than two-cycle self-ignition operation by using the spark plug (10).

7. The two-cycle self-ignition gasoline engine according to any one of claims 1 through 4, **characterized in that**
the engine comprises:
an intake valve (6);
an exhaust valve (8);
a switching means (6, 6a, 8, 8a, 24, 30) for switching a timing of opening and closing the intake valve (6) and the exhaust valve (8) in at least two steps to enable both two-cycle operation and four-cycle operation to be realized; and
a spark plug (10), and
in a high engine speed region, the engine conducts four-cycle spark ignition operation rather than two-cycle self-ignition operation by using the switching means (6, 6a, 8, 8a, 24, 30) and the spark plug (10).

8. The two-cycle self-ignition gasoline engine according to any one of claims 1 through 4, **characterized in that**
the engine comprises:
an intake valve (6);
an exhaust valve (8);
a switching means (6, 6a, 8, 8a, 24, 30) for switching a timing of opening and closing the intake valve (6) and the exhaust valve (8) in at least two steps to enable both two-cycle operation and four-cycle operation to be realized; and
a spark plug (10), and
in an extremely low engine load region, the engine conducts four-cycle spark ignition operation rather than two-cycle self-ignition operation by using the switching means (6, 6a, 8, 8a, 24, 30) and the spark plug (10).

9. The two-cycle self-ignition gasoline engine according to any one of claims 1 through 4, **characterized in that**
the engine comprises:
an intake valve (6);
an exhaust valve (8);
a switching means (6, 6a, 8, 8a, 24, 30) for switching a timing of opening and closing the intake valve (6) and the exhaust valve (8) in at least two steps to enable both two-cycle operation and four-cycle operation to be realized; and
a spark plug (10), and
in a high engine load region, the engine conducts four-cycle spark ignition operation rather than two-cycle self-ignition operation by using the switching means (6, 6a, 8, 8a, 24, 30) and the spark plug (10).

10. The two-cycle self-ignition gasoline engine according to any one of claims 7 through 9, **characterized in that** the four-cycle spark ignition operation is Atkinson cycle operation.

11. The two-cycle self-ignition gasoline engine according to any one of claims 1 through 10, **characterized in that**, in the two-cycle self-ignition operation, the excess air ratio (R) is at least 1.5 and a compression ratio (E) is at least 11.

## Patentansprüche

1. Zweitaktselbstzündungsbenzinverbrennungsmotor (1), **dadurch gekennzeichnet, dass**, wenn eine Kraftstoffeinspritzmenge in einem Zweitaktselbstzündungsbetriebsbereich groß ist, der Verbrennungsmotor ein Überschussluftverhältnis (R) auf einen größeren Wert erhöht, als wenn die Kraftstoffeinspritzmenge gering ist.

2. Zweitaktselbstzündungsbenzinverbrennungsmotor gemäß Anspruch 1, **dadurch gekennzeichnet, dass**
der Verbrennungsmotor eine Ladeeinrichtung (19, 19a) aufweist, und
wenn die Kraftstoffeinspritzmenge groß ist, die Ladeeinrichtung (19, 19a) den Ladedruck auf einen höheren Wert erhöht, als wenn die Kraftstoffeinspritzmenge gering ist, um das Überschussluftverhältnis (R) zu erhöhen.

3. Zweitaktselbstzündungsbenzinverbrennungsmotor gemäß Anspruch 1, **dadurch gekennzeichnet, dass**
der Verbrennungsmotor Folgendes aufweist:
ein Einlassventil (6);
ein Auslassventil (8); und
eine variable Einrichtung (6, 6a, 8, 8a, 24, 30), die einen Kurbelwinkelbereich von einem Öffnen des Auslassventils (e1) zu einem Schließen des Einlassventils (i2) in zumindest zwei Stufen variieren kann, und
wenn die Kraftstoffeinspritzmenge groß ist, die Variiereinrichtung (6, 6a, 8, 8a, 24, 30) den Kurbelwinkelbereich auf einen größeren Wert variiert, als wenn die Kraftstoffeinspritzmenge gering ist, um das Überschussluftverhältnis zu erhöhen.

4. Zweitaktselbstzündungsbenzinverbrennungsmotor gemäß Anspruch 1, **dadurch gekennzeichnet, dass**
der Verbrennungsmotor eine Einlassluftkühleinrichtung (17) aufweist, und
wenn die Kraftstoffeinspritzmenge groß ist, die Einlassluftkühleinrichtung (17) eine Einlasslufttemperatur auf einen niedrigeren Wert verringert, als wenn die Kraftstoffeinspritzmenge gering ist, um das Überschussluftverhältnis (R) zu erhöhen.

5. Zweitaktselbstzündungsbenzinverbrennungsmotor gemäß einem der Ansprüche 1 bis 4, **dadurch gekennzeichnet, dass**
der Verbrennungsmotor eine Ladevorrichtung aufweist, die einen Ladebetrieb im Bereich mit niedriger Verbrennungsmotorlast durchführen kann, und
wobei in dem Bereich mit niedriger Verbrennungsmotorlast die Ladevorrichtung den Ladebetrieb durchführt, um zu ermöglichen, dass der Zweitaktselbstzündungsbetrieb verwirklicht wird.

6. Zweitaktselbstzündungsbenzinverbrennungsmotor gemäß einem der Ansprüche 1 bis 4, **dadurch gekennzeichnet, dass**
der Verbrennungsmotor eine Zündkerze (10) aufweist, und
wobei in einem Bereich mit hoher Verbrennungsmotorlast der Verbrennungsmotor einen Zweitaktfunkenzündungsbetrieb eher als einen Zweitaktselbstzündungsbetrieb unter Verwendung der Zündkerze (10) durchführt.

7. Zweitaktselbstzündungsbenzinverbrennungsmotor gemäß einem der Ansprüche 1 bis 4, **dadurch gekennzeichnet, dass**
der Verbrennungsmotor Folgendes aufweist:
ein Einlassventil (6);
ein Auslassventil (8);
eine Umschalteinrichtung (6, 6a, 8, 8a, 24, 30) zum Umschalten einer Zeitabstimmung zum Öffnen und Schließen des Einlassventils (6) und des Auslassventils (8) in zumindest zwei Stufen um zu ermöglichen, dass sowohl der Zweitaktbetrieb als auch Viertaktbetrieb verwirklicht wird; und
eine Zündkerze (10) und
wobei in einem Bereich mit hoher Verbrennungsmotordrehzahl der Verbrennungsmotor den Viertaktfunkenzündungsbetrieb eher als den Zweitaktselbstzündungsbetrieb unter Verwendung der Umschalteinrichtung (6, 6a, 8, 8a, 24, 30) und der Zündkerze (10) durchführt.

8. Zweitaktselbstzündungsbenzinverbrennungsmotor gemäß einem der Ansprüche 1 bis 4, **dadurch gekennzeichnet, dass**
der Verbrennungsmotor Folgendes aufweist:
ein Einlassventil (6);
ein Auslassventil (8);
eine Umschalteinrichtung (6, 6a, 8, 8a, 24, 30) zum Umschalten einer Zeitabstimmung zum Öffnen und Schließen des Einlassventils (6) und des Auslassventils (8) in zumindest in zwei Stufen um zu ermöglichen, dass sowohl der Zweitaktbetrieb als auch der Viertaktbetrieb verwirklicht wird; und
eine Zündkerze (10) und
wobei in einem Bereich mit extrem niedriger Verbrennungsmotorlast der Verbrennungsmotor den Viertaktfunkenzündungsbetrieb eher als dem Zweitaktselbstzündungsbetrieb unter Verwendung der Umschalteinrichtung (6, 6a, 8, 8a, 24, 30) und der Zündkerze (10) durchführt.

9. Zweitaktselbstzündungsbenzinverbrennungsmotor gemäß einem der Ansprüche 1 bis 4, **dadurch gekennzeichnet, dass**
der Verbrennungsmotor Folgendes aufweist:
ein Einlassventil (6);
ein Auslassventil (8);
eine Umschalteinrichtung (6, 6a, 8, 8a, 24, 30) zum Umschalten einer Zeitabstimmung zum Öffnen und Schließen des Einlassventils (6) und des Auslassventils (8) in zumindest zwei Stufen um zu ermöglichen, dass sowohl der Zweitaktbetrieb als auch der Viertaktbetrieb verwirklicht wird; und
eine Zündkerze (10) und
wobei in einem Bereich mit hoher Verbrennungsmotorlast der Verbrennungsmotor den Viertaktfunkenzündungsbetrieb eher als den Zweitaktselbstzündungsbetrieb unter Verwendung der Umschalteinrichtung (6, 6a, 8, 8a, 24, 30) und der Zündkerze (10) durchführt.

10. Zweitaktselbstzündungsbenzinverbrennungsmotor gemäß einem der Ansprüche 7 bis 9, **dadurch gekennzeichnet, dass** der Viertaktfunkenzündungsbetrieb ein Atkinson-Betrieb ist.

11. Zweitaktselbstzündungsbenzinverbrennungsmotor gemäß einem der Ansprüche 1 bis 10, **dadurch gekennzeichnet, dass** in dem Zweitaktselbstzündungsbetrieb das Überschussluftverhältnis (R) zumindest 1,5 beträgt und ein Verdichtungsverhältnis (E) zumindest 11 beträgt.

## Revendications

1. Moteur à essence à auto-allumage à deux temps (1), **caractérisé en ce que**, lorsqu'une quantité d'injection de carburant est importante dans une région de fonctionnement à auto-allumage à deux temps, le moteur augmente un rapport d'excès d'air (R) à une valeur plus importante que lorsque la quantité d'injection de carburant est faible.

2. Moteur à essence à auto-allumage à deux temps selon la revendication 1, **caractérisé en ce que**
le moteur comprend un moyen de suralimentation (19, 19a), et
lorsque la quantité d'injection de carburant est importante, le moyen de suralimentation (19, 19a) augmente une pression de suralimentation à une valeur plus élevée que lorsque la quantité d'injection de carburant est faible afin d'augmenter le rapport d'excès d'air (R).

3. Moteur à essence à auto-allumage à deux temps selon la revendication 1, **caractérisé en ce que**
le moteur comprend :
une soupape d'admission (6) ;
une soupape d'échappement (8) ; et
un moyen de variation (6, 6a, 8, 8a, 24, 30) capable de faire varier une plage d'angle de vilebrequin depuis l'ouverture de la soupape d'échappement (e1) jusqu'à la fermeture de la soupape d'admission (i2) en au moins deux étapes, et
lorsque la quantité d'injection de carburant est importante, le moyen de variation (6, 6a, 8, 8a, 24, 30) fait varier la plage d'angle de vilebrequin à une valeur plus importante que lorsque la quantité d'injection de carburant est faible afin d'augmenter le rapport d'excès d'air.

4. Moteur à essence à auto-allumage à deux temps selon la revendication 1, **caractérisé en ce que**
le moteur comprend un moyen de refroidissement d'air d'admission (17), et
lorsque la quantité d'injection de carburant est importante, le moyen de refroidissement d'air d'admission (17) réduit une température d'air d'admission à une valeur inférieure à celle lorsque la quantité d'injection de carburant est faible afin d'augmenter le rapport d'excès d'air (R).

5. Moteur à essence à auto-allumage à deux temps selon l'une quelconque des revendications 1 à 4, **caractérisé en ce que**
le moteur comprend un compresseur volumétrique capable de mener une opération de suralimentation dans une région à faible charge du moteur, et
dans la région à faible charge du moteur, le compresseur volumétrique mène l'opération de suralimentation afin de permettre que l'opération d'auto-allumage à deux temps soit réalisée.

6. Moteur à essence à auto-allumage à deux temps selon l'une quelconque des revendications 1 à 4, **caractérisé en ce que**
le moteur comprend une bougie d'allumage (10), et
dans une région à charge élevée du moteur, le moteur mène une opération d'allumage par étincelle à deux temps plutôt qu'une opération d'auto-allumage à deux temps en utilisant la bougie d'allumage (10).

7. Moteur à essence à auto-allumage à deux temps selon l'une quelconque des revendications 1 à 4, **caractérisé en ce que**
le moteur comprend :
une soupape d'admission (6) ;
une soupape d'échappement (8) ;
un moyen de commutation (6, 6a, 8, 8a, 24, 30) destiné à commuter un cadencement d'ouverture et de fermeture de la soupape d'admission (6) et de la soupape d'échappement (8) en au moins deux étapes pour permettre qu'à la fois un fonctionnement en deux temps et un fonctionnement en quatre temps soient réalisés ; et
une bougie d'allumage (10), et
dans une région à vitesse élevée du moteur, le moteur mène à une opération d'allumage par étincelle à quatre temps plutôt qu'une opération d'auto-allumage à deux temps en utilisant le moyen de commutation (6, 6a, 8, 8a, 24, 30) et la bougie d'allumage (10).

8. Moteur à essence à auto-allumage à deux temps selon l'une quelconque des revendications 1 à 4, **caractérisé en ce que**
le moteur comprend :
une soupape d'admission (6) ;
une soupape d'échappement (8) ;
un moyen de commutation (6, 6a, 8, 8a, 24, 30) destiné à commuter un cadencement d'ouverture et de fermeture de la soupape d'admission (6) et de la soupape d'échappement (8) en au moins deux étapes pour permettre qu'à la fois un fonctionnement en deux temps et un fonctionnement en quatre temps soient réalisés ; et
une bougie d'allumage (10), et
dans une région à charge extrêmement faible du moteur, le moteur mène à une opération d'allumage par étincelle à quatre temps plutôt qu'une opération d'auto-allumage à deux temps en utilisant le moyen de commutation (6, 6a, 8, 8a, 24, 30) et la bougie d'allumage (10).

9. Moteur à essence à auto-allumage à deux temps selon l'une quelconque des revendications 1 à 4, **caractérisé en ce que**
le moteur comprend :
une soupape d'admission (6) ;
une soupape d'échappement (8) ;
un moyen de commutation (6, 6a, 8, 8a, 24, 30) destiné à commuter un cadencement d'ouverture et de fermeture de la soupape d'admission (6) et de la soupape d'échappement (8) en au moins deux étapes pour permettre qu'à la fois un fonctionnement en deux temps et un fonctionnement en quatre temps soient réalisés ; et
une bougie d'allumage (10), et
dans une région à charge élevée du moteur, le moteur mène à une opération d'allumage par étincelle à quatre temps plutôt qu'une opération d'auto-allumage à deux temps en utilisant le moyen de commutation (6, 6a, 8, 8a, 24, 30) et la bougie d'allumage (10).

10. Moteur à essence à auto-allumage à deux temps selon l'une quelconque des revendications 7 à 9, **caractérisé en ce que** l'opération d'allumage par étincelle à quatre temps est une opération de cycle d'Atkinson.

11. Moteur à essence à auto-allumage à deux temps selon l'une quelconque des revendications 1 à 10, **caractérisé en ce que**, pendant l'opération d'auto-allumage à deux temps, le rapport d'excès d'air (R) est d'au moins 1,5 et un rapport de compression (E) est d'au moins 11.
